# EUROPEAN PATENT SPECIFICATION

(11) **EP 0 284 394 B1**
(45) Date of publication and mention of the grant of the patent: **24.05.1995**
(21) Application number: 88302620.5
(22) Date of filing: 24.03.1988
(51) Int. Cl.: B01D 57/02, B01D 15/00, G01N 27/26

(54) **Selective high performance electrokinetic separations employing the surface of moving charged colloidal particles**
Hochwirksame selektive elektrokinetische Trennungen an der Oberfläche bewegter geladener kolloidaler Teilchen
Séparations électrocinétiques sélectives à haute efficacité employant la surface de particules colloidales chargées en mouvement

(30) Priority: 24.03.1987 US 30225
(43) Date of publication of application: 28.09.1988
(73) Proprietor: NORTHEASTERN UNIVERSITY, Boston Massachusetts 02115 (US)
(72) Inventor: Karger, Barry L., Chestnut Hill Massachusetts 02167 (US); Cohen, Aharon, Brookline Massachusetts 02146 (US)
(74) Representative: Arthur, Bryan Edward

(56) References cited:
- DE-A- 3 632 226
- INTERNATIONAL LABORATORY, vol. 16, no. 7, September 1986, FAIRFIELD CT,US, pp. 32 - 42; P.McFADYEN: "Electrophoretic mobility and zeta potential of colloidal particles"
- Analytical Chemistry,vol. 57, no. 4, April 1985, Washington, USA, pp. 834 - 841; S. Terabe et al.: "Electrokinetic Chromatography with Micellar Solution and Open-Tubular Capillary"
- Science, vol.222, 21 October 1983, Washington, USA, pp. 266 - 272; J.W. Jorgenson et al.: "Capillary Zone Electrophoresis"
- Journal of Applied Chemistry ,USSR 1981, New York ,USA, pp. 71 - 76; A.E. Kovylov et al.: "Electrophoretic Phase Separation in Aqueous Dispersions of Inorganic Materials"

## Description

### FIELD OF THE INVENTION

This invention relates to separation techniques, and more particularly, to an electrokinetic separation method and column employing charged colloidal particles whose surface interacts with molecular species to be separated.

### BACKGROUND OF THE INVENTION

Free zone electrophoresis in an open tube or capillary is an emerging technique for separating molecules of biological interest. In this method, the zeta potential on the capillary wall is a minimum. A solution containing the molecules to be separated is placed in an electric field, which causes charged molecules to move toward the electrode of opposite charge at varying rates depending upon their respective charges and sizes.

Electroosmosis is the name given to the phenomenon involving bulk solvent migration in an electrophoresis experiment conducted in a capillary possessing charge on its inner surface. The bulk solvent flow is toward the electrode having the same charge as the capillary wall and results from migration of hydrated counterions corresponding to the charges on the capillary surface. In the case of a negatively charged capillary, these hydrated counterions move toward the negative electrode when the system is placed in an electric field, carrying the bulk solvent along with them.

Electrophoresis is generally applicable to the separation of charged materials provided only that their electrophoretic mobilities are sufficiently different from each other. Thus, electrophoresis has been applied to the separation of such materials as proteins, nucleic acid components, and cells. Many materials of biological interest are charged in solution, and although electrophoresis can in principle be used to separate them, some such materials have very similar electrophoretic mobilities and hence are poorly separated.

Electrophoresis of charged colloids is known. See for example the symposium papers published in "Modern Trends of Colloid Science in Chemistry and Biology" International Symposium on Colloids and Surface Science, 1984, edited by Hans Friedrich Eicke, Brikhauser Verlog, 1985. International Laboratory, vol 16, No. 7 September 1986, pages 32 to 42, describes electrophoresis in combination with particle size analysis as a means of measuring the zeta potential which exists at the effective boundary between a particle or droplet and its surrounding medium in order to determine the stability of colloidal particles in a given medium and thereby characterize colloidal and biological systems.

Elecrokinetic separation of uncharged solutes via partitioning of such solutes between charged micelles of sodium dodecyl sulfate and the surrounding dispersing medium has also been accomplished. As used herein, "partition" means liquid-liquid distribution as species between the dispersing medium and the interior of a micelle. See for example the papers by Terabe, et al., in Analytical Chemistry, 56, 834-841 (1985); and Analytical Chemistry, 56, lll (1984). In this technique, the bulk solvent movement toward the negative electrode caused by electroosmosis sweeps the negatively charged micelles of SDS toward this electrode in spite of their tendency to move toward the positive electrode by electrophoresis. The neutral species to be separated partition themselves between the dispersing medium and the interior of the micelles, and hence move toward the negative electrode at rates which respectively depend upon their distributions between the micelles and the medium. Molecules which do not partition into the micelles move toward the negative electrode at the bulk solvent flow velocity.

A paper by P. Gozel, et al., in Analytical Chemistry, 59, 44-49 (1987), extended Terabe's work to the separation of racemic mixtures of derivatized amino acids, employing diastereoisomeric copper II complexes and micelles of sodium tetradecyl sulfate. Other recent papers have also dealt with electrokinetic separations involving micelles. See, for example, the paper by M.J. Sepaniak and R.O. Cole, Analytical Chemistry, 59, 472 (1987).

An alternative separation method widely used today is adsorption chromatography. In this technique, resolution is based on differences in the extent of adsorption of molecules on various surfaces. Today, tailor-made surfaces can be employed for separation of closely related species such as optical isomers (B. Feibush, et al., J. Amer. Chem. Soc., 108 3310-3318 (1986)) and oligonucleotides of a common base number but different sequence. In addition, high selectivity can be achieved using biospecific adsorption such as affinity chromatography.

The fields of capillary electrophoresis and modern adsorption chromatography have up to now not been combined. Each has advantages, e.g., electrophoresis provides high efficiency, while adsorption chromatography provides high selectivity by the use of specifically-chosen adsorptive surfaces.

In view of the importance of biochemistry and biotechnology in medical research and in the production of myriad materials of pharmaceutical or biological interest, as well as the ever-increasing demands placed on analysts working in such fields as environmental and industrial chemistry, it is of great interest to the scientific community to have improved procedures and tools for separating complex mixtures of molecular species. The present invention combines the efficiency of capillary electrophoresis and the selectivity of adsorption chromatography for high performance separations.

The need for improved methods and techniques for separating complex mixtures of molecular species is addressed in the present invention, which provides a highly sensitive, efficient, and selective method for separating complex mixtures of materials. A capillary column containing colloidal material for carrying out such separations is also disclosed. The separating method and capillary column to be described below offer the advantages of rapid high resolution separations of complex mixtures of materials using very small sample sizes, while simultaneously providing an extremely high and adjustable selectivity so that separations of the molecules of particular interest can be readily optimized.

The present invention, which is defined in the claims is an electrokinetic method of separating molecular species. The key to the success of the separation method is the use of the surface of colloidal particles to mediate the separation.

In the method of the present invention, the surface of the solid colloidal particles is employed in its original state provided it has the required interacting capability, or is modified appropriately, for accomplishing a particular separation, by incorporation thereon of chemical functional groups or by addition thereto of material which can interact with species to be separated. In one example of this process, the surface of negatively charged colloidal particles is modified by the addition of positive ions of at least one metal having the ability to interact with the species being separated. In another embodiment, the colloid's surface is modified by the incorporation thereon of affinity groups. It is to be emphasized that the foregoing are only a few of many possible examples of the invention.

### DESCRIPTION OF THE DRAWINGS

The invention will be better understood from a consideration of the following detailed description taken in conjunction with the solely exemplary drawing in which:
Fig. 1 shows a schematic diagram of the proposed mechanism for one variant of the separating method, illustrated for a system containing negatively charged colloidal particles, negatively charged analytes, positively charged complexing agents, and a fused silica capillary; and
Fig. 2 shows a diagram of the equipment employed in carrying out separations using the method and capillary column of the invention.

### DETAILED DESCRIPTION

As used in this document, the term "colloidal particles" means particles of solid material or groupings of molecules surrounded by a liquid dispersion medium. The phrase includes sols but excludes micelles. The phrase "affinity group" means any chemical functional group or molecule which has an affinity for another sort of functional group or molecule, so that when the affinity group contacts material with which it has affinity, complexation or adsorption occurs.

In one embodiment of the invention, the electrokinetic separation method is carried out by providing a dispersion of charged colloidal particles in an electrically-conductive medium in a capillary tube, the surface of the colloidal particles being capable of interacting chemically with at least one molecular species. An aliquot of a mixture containing a plurality of molecular species to be separated, and including the molecular species with which the colloidal surface is capable of interacting, is placed into the colloidal dispersion in the capillary, an electric field is imposed across the capillary, and the separated molecular species are detected as they traverse the capillary.

The charge on the colloid is due to the presence of charged functional groups on the colloidal surface and is either inherently present on the colloid as formed or is produced by suitable modifications of the initially-formed colloidal material to incorporate such charged functional groups, such modifications being known to those skilled in the art. Depending on the particular configuration employed, the charge on the colloidal particles may be either positive or negative.

The surface of the colloid particles is capable of interacting with one or more of the molecular species to be separated. If it does not possess this property as originally formed, the surface is suitably modified by adding to it at least one material having the ability to interact selectively with the molecular species to be separated. The material added to the surface of the charged colloidal particles may be neutral in charge provided that it fulfils the requirement of being able to interact with the molecular species being separated, or it may be charged, the charge generally being opposite to the charge on the species being separated. The modifications of the colloidal surface are accomplished either by incorporating chemical functional groups into or onto the colloidal surface, generally before the colloidal material is placed in the capillary, or by adding to the dispersing buffer-mobile phase one or more complexing materials which adhere to and modify the colloidal surface. Examples of functional groups useful in the invention are the so-called "affinity groups" employed in affinity chromatography, while positive metal ions provide an example of adhering additives in the mobile phase.

Sample injection is conducted by siphoning a small amount of sample into the capillary, or by electroinjection, both of these techniques being well known to those skilled in the art. For details on injection techniques see the articles by (a) S. Terabe, et al., Analytical Chemistry, 57, 834-841 (1985); (b) J.W. Jorgenson and K.D. Lukacs, Science, 222, 266-272 (1983), and (c) R.A. Wallingsford and A.G. Erving, Analytical Chemistry, 59 681 (1987), these articles being hereby incorporated by reference.

Imposing an electric field across the capillary tube causes a separation of the analytes to occur. The potential field to be employed in carrying out the separating method is a function of the length of the capillary used. Typically a minimum of 50 volts per cm and a maximum of 500-600 volts per cm is employed. It is desirable to minimize the current which flows through the capillary to minimize Joule heating effects. This is accomplished by employing appropriate concentrations of buffer, and/or by using buffers having relatively low conductivities. Such current regulation is known to those skilled in the art. Buffers and their use are discussed in the book "Buffers for pH and Metal Ion Control," by D.D. Perrin and B. Dempsey, published by Chapman and Hall, London (1974). Cooling of the capillary column while it is in use is preferred for good reproducibility. Such cooling may be accomplished in any of the ways known to the art, for example, by circulation of constant temperature air or by circulation of a constant temperature liquid through a jacket surrounding the capillary column.

The electrophoresis equipment to be employed in carrying out the process of the invention, in particular, the power supply for use in imposing the electric field across the capillary and the detector for use in detecting the separated molecular species, are known and are commercially available from several instrument manufacturers.

The capillary column of the invention includes a capillary containing charged solid colloidal particles in an electrically-conductive medium, and a material capable of interacting with molecular species to be separated, this material being located on the surface of the colloidal particles and being present on the colloid as formed or as a result of subsequent additions to or modification of the colloidal surface.

The capillary typically has a length in the range of 10-100cm from the injection end to the detector, but the actual capillary is somewhat longer than this to permit the detector end to reach the conducting buffer reservoir. It generally has an internal diameter of 25-150 microns. For most purposes, the preferred dimensions are 40-80cm in length and 50-100 microns internal diameter. Fused silica is the preferred material of construction, though capillaries of other materials such as glass, alumina and beryllia may also be employed.

Silica normally has negative charges on its inner surface. However, if a positively-charged inner surface is desired, this can be produced by coating the surface with a layer of a positively-charged material such as polyethylenimine, as is known to the art. In this regard, see the article by A.J. Alpert and F.E. Regnier, J. Chromatography, 185, 375-392 (1979), which is hereby incorporated by reference. In the event that a capillary having an essentially uncharged surface is desired, for example, if free zone electrophoresis is to be conducted, the capillary may be treated as disclosed by S. Hjerten in J. Chromatography, 374, 191-198 (1985), which is hereby incorporated by reference.

A representative but not exhaustive list of classes of particlate colloidal materials is: polyacrylamides, polyacrylic acids, polyacrylonitriles, polyamides, polyesters, polycaprolactams, polycaprolactones, polycarbonates, polysiloxanes, polyethyleneoxides, polyimines, nylons, polyimides, polystyrenes, polysulfones, polyolefins such as polyethylenes, polypropylenes, and polybutadienes, and polymers of vinyl monomers, such as poly(vinylchloride) and poly(vinylalcohol), and kaolin.

Polystyrene is a preferred type of particulate colloid which may be employed in the invention, because it is readily available and because its surface may readily be modified in a variety of ways known to those skilled in the art, to produce either positively or negatively charged functional groups. Examples of other preferred particulate colloidal materials are silica and poly(vinylchloride). The concentration of particulate colloids to be employed depends on the sizes of the particles, their charges, and the surface area desired.

The buffer provides a conductive path for the electrical circuit and also controls the charges on various segments of the system. It is generally selected to have a low conductivity to minimize the current and thereby to minimize Joule heating effects. Tris borate and phosphate buffers are preferred. Other possible buffers include but are not limited to HEPES and acetate buffers.

Any material which can be attached to the surface of the colloidal particles and which can in turn interact with the molecular species being separated may be employed as the surface-modifying agent. Chemical functional groups such as "affinity groups" employed in affinity chromatography are one example of surface-modifying materials, as are materials which adsorb to the colloidal surface, such as metal ions.

A representative but not exhaustive list of chemical functionalities which can be attached to the surface of the colloidal particles to provide this surface with the ability to interact with molecular species being separated follows; the material each type of functionality interacts with is shown in parentheses: antibodies (antigens); antigens (antibodies); oligonucleotides (complementary oligonucleotides); anions such as -CO₂ (cations such as -⁺NH₃); concanavalin A (glycoproteins); p-aminobenzamidine (plasmin); metal salts of ATP (adenylatekinase).

Where the colloidal particles are negatively charged, positively charged surface-modifying agents are desirable. Any metal may in principal be employed to modify the surface of negatively charged colloidal particles, but metals having biological importance such as the transition metals, the alkali metals, the alkaline earth metals, and the lanthanides are preferred. Representative transition metals useful in the invention are copper, iron, zinc, and nickel, while representative alkaline earth metals are calcium and magnesium.

In the case of metal additives in the buffer, negatively charged colloidal particles are preferred for the separation of negatively charged species because it then becomes possible to modify the surface of the colloidal particles conveniently by means of the addition of any of a wide variety of positive metal ions, which in turn have different selectivities with respect to various possible analytical species to be separated.

An alternative embodiment of the invention employs the same concepts but with each element of the opposite charge. In particular, it is possible to separate positive species by the method of the invention employing a capillary containing positively charged colloidal particles. For example, an alkyl ammonium salt of a long chain amine can be chemically bonded via the alkyl chain to a colloid or adsorbed onto hydrophobic colloidal particles, producing a positively charged surface on the particles. The particle surface can be employed for separations of negative species directly, can be further modified by the addition of negative materials capable of interacting with particular positively charged analytes, or can be further modified to contain affinity groups. It is also possible to employ neutral colloidal surface-modifying agents, provided that they are able to interact with the analytical species to be separated and do not reduce the charge on the colloid significantly.

In carrying out the separation method of the invention, an appropriate capillary is selected and one end is attached to a suitable detector, a mixture of buffer and colloidal particles having an appropriately-active surface is prepared, the capillary is filled with the colloid in buffer solution with the ends of the capillary being maintained in the buffer solution, a small aliquot of sample is injected into the front end of the capillary, and electrophoresis is carried out in the normal fashion.

In addition to use of the method and capillary column of the invention in qualitative and quantitative analysis of complex mixtures, it is also possible and advantageous to carry out micropreparative separations by collecting appropriate fractions as the separated materials exit the capillary column. Each peak consists of colloidal particles and a single desired analyte. The analytes are separated from the colloidal material either on-line or off-line by methods known to the art. See, for example, L. Johansen et al., J. Imm. Methods, 59. 255-264 (1983); and J.L. Millain et al., Clin. Chem., 31, 54-59 (1985).

Although the best separations are achieved using charged colloidal particles having a surface which is capable of interacting with one or more of the molecular species to be separated, those skilled in the art will realize that uncharged particles may also be employed, in electroosmosis - based purification procedures.

It is believed that the interaction of the colloidal surface with molecular species being separated mediates the movement of the separating species in any of several ways, depending on the particulars of each case. The following comments are offered only as aids in understanding the invention, the Applicants not wishing to be bound by any of the particular theories advanced.

To the extent that separating species are associated with the colloidal surface they move through the capillary with the colloid. In the case of free zone electrophoresis, in which the capillary inner wall is essentially neutral, the electrophoretic mobility and possibly the direction of motion of the separating species are changed from those of the unassociated analytes. For the case of a combination of electrophoresis and electroosmosis operating simultaneously in a capillary having a charged inner wall, the separating species will tend to migrate through the column more slowly than they otherwise would, and in a direction which depends on whether electrophoresis or electroosmosis dominates. In all cases, the surface of the colloidal particles interacts with analytes like the stationary phase of a chromatographic column, but as the invention combines chromatography and electrokinetic separation principles, this "stationary" phase moves at a fixed rate.

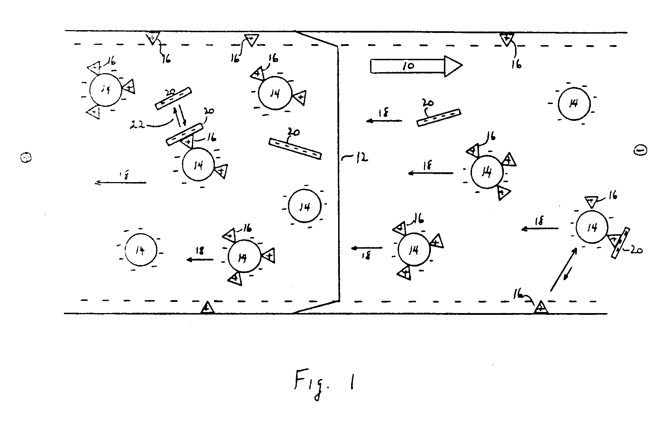

As one example, for the case of a fused silica capillary, negatively charged colloidal particles, positively-charged surface-modifying species such as metal ions, and a mixture of negatively charges species such as oligonucleotides to be separated, the situation is believed to be generally as illustrated in Fig. 1. The fused silica capillary has negative charges on its surface. The counter ions corresponding to these surface charges are hydrated in solution and migrate toward the negative electrode as shown by arrow 10 upon application of an electric field across the length of the capillary. This is electroosmosis, discussed above, and produces a very uniform osmotic flow profile 12 as is known to those skilled in the art. Negatively charged colloidal particles 14, are present in the buffered dispersing medium (medium not shown). These move toward the negative electrode by electroosmosis because of bulk solvent flow, but are slowed by their tendency to move toward the positive electrode by electrophoresis. The net result is that such anionic particles move toward the negative electrode, but move in this direction more slowly than uncharged molecules would move by electroosmosis. If positively-charged complexing agents 16 are on the surface of the colloidal particles, the electrophoretic migration of the particles may be altered. Solute molecules that can interact with the complexing agent on the colloidal surface will now migrate in the electric field as a function of their distribution between the surface of the colloid and the medium.

The direction of electrophoretic migration of negative species is shown by arrows 18. Upon addition of a mixture of negatively charged analytes such as oligonucleotides 20, which can interact with the complexing agent 16 on the surface of the colloidal particles, these analytes 20 distribute themselves between the modified colloidal surface and the buffered dispersion medium as shown by equilibrium 22. The equilibrium constant for the complexation of any given analyte 20 with a modified colloidal surface is different from that of other analytes, depending on such factors as the shape, size, and charges on the analytes. Because of the distribution of the analytes between the bulk solution and the colloidal surface, each type of analyte will move at a rate determined by the amount of time it spends attached to the colloidal particles. As the charged colloidal particles move only slowly toward the negative electrode, the analytes thus move slowly toward the negative electrode. With the resulting large "time window" for separations, small differences in overall migration rates of different analytes can produce separations. Factors which affect the differential retention include the amount and type of charge on the species involved, the material modifying the surface of the micelle, the temperature, the pH, etc.

As another example, affinity groups could be covalently attached to the surface of solid colloidal particles while still maintaining sufficient charge for electrophoretic migration of the colloid. The affinity groups could then selectively adsorb their complement by the principle of biospecific recognition. The complement molecules would then migrate with the colloid.

### Apparatus

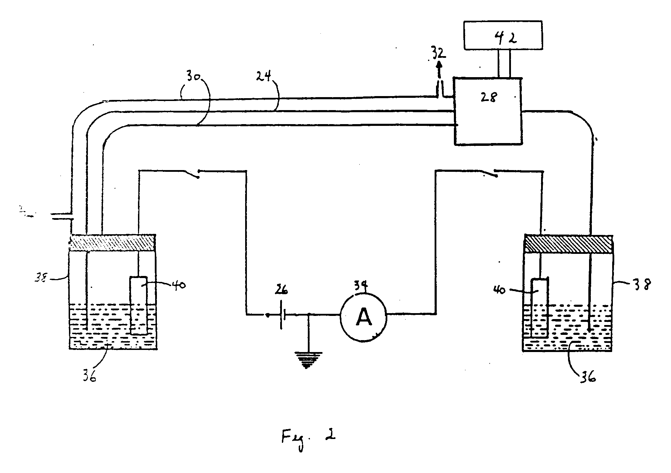

An experimental setup employed is shown in Fig. 2, and comprises fused silica tubing 24 of 0.05mm ID (Scientific Glass Engineering, Ringwood, Victoria, Australia) with various column lengths from 500-850mm, depending on the experiment. A regulated high voltage D.C. power supply 26, Model LG-30R-5 (Glassman, Whitehouse Station, NJ) which could deliver high voltage up to 30kV was used to produce the potential across the capillary. A UV detector 28 was employed (Soma S-3702, IR&D, Kingston, MA). This detector was modified as described in the article by Terabe, S., et al., Analytical Chemistry, 56, 111-113 (1984), which is hereby incorporated by reference. The tubing was thermostated at 28°C using a liquid cooling system (Lexacal Model EX-100DD with FTC-350A, Neslab Instruments, Inc., Portsmouth, NH). Cooling fluid from this unit was circulated through a manifold 30 surrounding capillary 24 as shown by arrows 32. An amperometer 34 monitored the current in the circuit. Each end of the capillary was immersed in buffer solution 36 contained in buffer reservoirs 38. Each buffer reservoir also contained a platinum electrode 40 connected to power supply 26. A Nelson Analytical Model 762SB A/D interface (Cupertino, CA) attached to an IBM PC/XT 42 was used to record the electropherograms and to process data.

The water was deionized and triply distilled. The other reagents were A.R. purity grade. All buffer solutions were filtered through a Nylon 66 filter unit of 0.2 »m pore size (Schleicer and Schuell, Keene, NH).

### Procedure

Capillary tubes were filled with the desired buffer using a 100»L gas tight syringe (Hamilton Company, Reno, NV). Both ends of the tube were then dipped into separate 5mL reservoirs filled with the same buffer. The end in which samples were introduced was connected with platinum electrodes to the positive high voltage. The reservoir at the detector was connected with platinum electrodes to ground. Samples were introduced either by electroinjection or by siphoning. The migration time t₀ of an uncharged species was determined from the solvent peak or injection of a trace of methanol.

### EXAMPLES

a) Negatively charged polystyrene latex particles are prepared by polymerization of styrene under a nitrogen atmosphere using potassium persulfate as initiator, then purified by dialysis and ion exchange. The negative charges on the particles result from fragments of the initiator. The polystyrene particles are mixed with an electrically-conductive buffer and the mixture is placed in a capillary tube, which is in turn connected to the electrophoresis apparatus discussed above and shown in Fig. 2. Those skilled in the art would be able to apply various approaches to stabilize the colloidal solutions. A sample containing one or more proteins is injected and an electric field is imposed. Depending on the ionic strength and the pH of the medium and the pI's of the proteins, the proteins will distribute themselves to various extents between the medium and the colloid surface. Separation is achieved by electrophoretic migration or electroosmotic flow, or both, and the separated materials are detected as they pass the detector. The proteins may be desorbed from the particles either on-line or off-line if desired, and may be collected as pure protein fractions.
b) Concanavalin A is covalently bound to the surface of colloidal particles of silica by a known procedure described in the Journal of Chromatography, 297, 167-177 (1984), which is hereby incorporated by reference. The concanavalin A is an affinity group which interacts specifically with α-linked mannose groups in materials such as glycoproteins and lectin. After this interaction, the particles remain charged. The surface-modified colloidal particles are mixed with an electrically-conductive buffer and the mixture is placed in a capillary tube, which is in turn connected to the electrophoresis apparatus described above and shown in Fig. 2. A sample containing one or more glycoproteins is injected and an electric field is imposed. The glycoprotein(s) will specifically adsorb to the colloid surface and will separate from the other materials present in the sample by electrophoretic migration, electroosmosis, or both, depending on whether the colloid and capillary are both charged or only one is charged. The separated materials are detected, and the glycoprotein(s) can be desorbed from the colloid particles either on-line or off-line, and collected.
c) The affinity group p-aminobenzamidine is covalently bound via a molecular spacer to hydrophobic particles of a polyvinyl polymer by a procedure given in the Journal of Chromatography, 292, 369-382 (1984) which is hereby incorporated reference. This group interacts specifically with plasmin and plasminogen. Upon mixing the surface-modified colloidal particles in a buffer, filling a capillary tube with the resulting mixture, placing the tube in an electrophoresis apparatus, and injecting a sample containing plasmin and plasminogen, the plasmin of/or plasminogen will adsorb to the colloid. Upon application of an electric field plasmin-colloid and/or plasminogen-colloid complexes will be separated from other materials present in the sample, and detected after traversing the capillary. The adsorbed material is subsequently desorbed from the colloid, either on-line or off-line, if desired, and collected.

## Claims

1. An electrokinetic method of separating molecular species, employing the surface of colloidal solid particles, comprising the steps of:
providing a dispersion of colloidal solid particles in an electrically-conductive medium in a capillary tube, said colloidal solid particles having an exterior surface capable of interacting with at least one molecular species to be separated, at least the colloidal solid particles or the said at least one molecular species being charged;
placing into said dispersion an aliquot of a mixture containing a plurality of molecular species including said at least one molecular species to be separated; and
imposing an electric field across the length of said capillary tube having an inner wall, and selectively applying a charge to the inner wall of the capilliary tube;
whereby said at least one molecular species distributes between the medium and the exterior surface of the colloidal solid particles while traversing the capillary tube, separating from other molecular species in the mixture.

2. The method of claim 1 wherein a charge on said colloidal solid particles (14) is provided by charged functional groups (16) on said exterior surface.

3. A method as claimed in any preceding claim wherein said colloidal solid particles (14) are charged and said capillary tube (24) has an inner wall which is charged with the same polarity as said colloidal solid particles (14).

4. A method as claimed in any of claims 1 or 2 wherein said capillary tube (24) has an inner wall which is uncharged.

5. A method as claimed in any preceding claim wherein the surface of said colloidal solid particles (14) is modified by the incorporation thereon of at least one material which has the ability to interact chemically with the molecular species (20) to be separated.

6. The method of claim 5 wherein the surface of said colloidal solid particles (14) is modified by the addition thereto of metal ions (16).

7. The electrokinetic method of claim 6, wherein said surface-modifying material (16) is selected from the group consisting of the transition metals and alkaline earth metals.

8. The electrokinetic method of claim 7 wherein said surface-modifying material (16) is selected from the group consisting of copper, iron, zinc, nickel, calcium and magnesium.

## Patentansprüche

1. Elektrokinetisches Verfahren zum Trennen von Molekülspezies, das die Oberfläche von kolloidalen festen Teilchen verwendet und folgende Schritte umfaßt:
- Bereitstellen einer Dispersion von kolloidalen festen Teilchen in einem elektrisch leitenden Medium in einem Kapillarrohr, wobei die kolloidalen festen Teilchen eine Außenoberfläche aufweisen, die mit wenigstens einer zu trennenden Molekülspezies wechselwirken kann, wobei wenigstens die kolloidalen festen Teilchen oder die wenigstens eine Molekülspezies geladen ist;
- Anordnen eines aliquoten Teils einer Mischung, die eine Mehrzahl von das mindestens eine zu trennende Molekülspezies einschließenden Molekülspezies enthält, in der Dispersion; und
- Anlegen eines elektrischen Feldes auf der Länge des eine Innenwand aufweisenden Kapillarrohres und selektives Anlegen einer Ladung an die Innenwand des Kapillarrohres,
wodurch die wenigstens eine Molekülspezies sich zwischen dem Medium und der Außenoberfläche der kolloidalen festen leilchen verteilt, während es das Kapillarrohr durchquert, wobei es von anderen Molekülspezies in der Mischung getrennt wird.

2. Verfahren nach Anspruch 1, bei dem eine Ladung an den kolloidalen festen Teilchen (14) durch geladene funktionelle Gruppen (16) an der Außenoberfläche vorgesehen ist.

3. Verfahren nach einem der vorhergehenden Ansprüche, bei dem die kolloidalen Teilchen (14) geladen sind und das Kapillarrohr (24) eine Innenwand aufweist, die mit derselben Polarität wie die kolloidalen festen Teilchen (14) geladen ist.

4. Verfahren nach Anspruch 1 oder 2, bei dem das Kapillarrohr (24) eine Innenwand aufweist, die ungeladen ist.

5. Verfahren nach einem der vorhergehenden Ansprüche, bei dem die Oberfläche der kolloidalen festen Teilchen (14) durch die Inkorporation von wenigstens einem Material modifiziert wird, welches die Fähigkeit besitzt, chemisch mit den zu trennenden Molekülspezies (2) wechselzuwirken.

6. Verfahren nach Anspruch 5, bei dem die Oberfläche der kolloidalen festen Teilchen (14) durch das Hinzufügen von Metallionen (16) modifiziert wird.

7. Elektrokinetisches Verfahren nach Anspruch 6, bei dem das Oberflächen modifizierende Material (16) aus der Gruppe ausgewählt wird, die aus den Übergangsmetallen und Alkalimetallen besteht.

8. Elektrokinetisches Verfahren nach Anspruch 7, bei dem das Oberflächen modifizierende Material (16) aus der Gruppe ausgewählt wird, die aus Kupfer, Eisen, Zink, Nickel, Calcium und Magnesium besteht.

## Revendications

1. Procédé électrocinétique de séparation de variétés moléculaires utilisant la surface de particules solides colloïdales comprenant les étapes suivantes :
- on effecute une dispersion de particules solides colloïdales dans un milieu électriquement conducteur dans un tube capillaire, lesdites particules solides colloïdales ayant une surface extérieure susceptible d'interagir avec au moins une variété moléculaire à séparer, au moins les particules solides colloïdales ou ladite au moins une variété moléculaire étant chargées ;
- on place dans ladite dispersion une partie aliquote d'un mélange contenant une pluralité de variétés moléculaires comprenant ladite au moins une variété moléculaire à séparer ; et
- on soumet la longueur dudit tube capillaire comportant une paroi interne à un champ électrique, et l'on applique sélectivement une charge à la paroi interne du tube capillaire ;
grâce à quoi ladite au moins une variété moléculaire se distribue entre le milieu et la surface extérieure des particules solides colloïdales lors de la traversée du tube capillaire, ce qui réalise la séparation d'avec les autres variétés moléculaires dans le mélange.

2. Procédé selon la revendication 1, dans lequel on prévoit une charge sur lesdites particules solides colloïdales (14) au moyen de groupes fonctionnels chargés (16) sur ladite surface extérieure.

3. Procédé selon l'une quelconque des revendications précédentes, dans lequel lesdites particules solides colloïdales (14) sont chargées et ledit tube capillaire (24) a sa paroi interne qui est chargée avec la même polarité que lesdites particules solides colloïdales (14).

4. Procédé selon l'une quelconque des revendications 1 ou 2, dans lequel ledit tube capillaire (24) a une paroi interne qui n'est pas chargée.

5. Procédé selon l'une quelconque des revendications précédentes, dans lequel la surface desdites particules solides colloïdales (14) est modifiée par incorporation sur elle d'au moins un matériau qui a la faculté d'interagir chimiquement avec les variétés moléculaires (20) que l'on veut séparer.

6. Procédé selon la revendication 5, dans lequel la surface desdites particules solides colloïdales (14) est modifiée par addition à elle d'ions métalliques (16).

7. Procédé électrocinétique selon la revendication 6, dans lequel ledit matériau (16) modificateur de surface est choisi parmi le groupe comprenant les métaux de transition et les métaux alcalino terreux.

8. Procédé électrocinétique selon la revendication 7, dans lequel ledit matériau modificateur de surface est choisi parmi le groupe comprenant le cuivre, le fer, le zinc, le nickel, le calcium et le magnésium.
